# EUROPÄISCHE PATENTSCHRIFT

(11) **EP 0 830 993 B1**
(45) Veröffentlichungstag und Bekanntmachung des Hinweises auf die Patenterteilung: **14.11.2001**
(21) Anmeldenummer: 97116370.4
(22) Anmeldetag: 19.09.1997
(51) Int. Cl.: B60R 22/46

(54) **Gurtstraffer**
Belt tensioner
Tendeur de ceinture

(30) Priorität: 20.09.1996 DE 29616414 U
(43) Veröffentlichungstag der Anmeldung: 25.03.1998
(73) Patentinhaber: TRW Occupant Restraint Systems GmbH & Co. KG, 73551 Alfdorf (DE)
(72) Erfinder: Wier, Franz, 73571 Göggingen (DE)
(74) Vertreter: Kitzhofer, Thomas, Dipl.-Ing.

(56) Entgegenhaltungen:
- DE-A- 2 364 235
- DE-A- 2 411 702
- DE-U- 29 608 210

## Beschreibung

Die Erfindung betrifft einen Gurtstraffer nach dem Oberbegriff des Anspruchs 1.

Ein Gurtstraffer ist aus der EP 0 616 928 A1 bekannt. Der dabei vorgesehene Kolben ist aus mehreren Teilen zusammengesetzt, zwischen denen ein vorzugsweise plastisch verformbares Dämpfungselement angeordnet ist. An einem Teil ist an dessen dem Arbeitsraum zugewandten stirnseitigen Ende ein konisch nach außen geformter Wulst vorgesehen, der eine starre Dichtkante bildet. Ein Zylinder wird durch Ablängen eines z.B. durch Ziehen hergestellten und damit theoretisch unendlich langen Rohres hergestellt. Da sich der Innendurchmesser des Rohres durch Abnutzung der Bearbeitungswerkzeuge ändert, ist auch der Innendurchmesser von Zylinder zu Zylinder großen Schwankungen unterworfen. Eine starre Dichtkante kann deshalb nicht bei jedem Zylinder eine optimale Dichtwirkung gewährleisten, so daß bei einem Zylinder mit großem Innendurchmesser Druckgas am Kolben entlang aus dem Arbeitsraum strömen kann, was die Leistung des Gurtstraffers verringert.

Aus der DE-U1-296 08 210 ist ein gattungsgemäßer Gurtstraffer bekannt, dessen Kolben ein Dichtteil mit einer dünnen Dichtlippe aufweist, die sich axial ersteht und an der Wand des Zylinders anliegt.

Die Erfindung schafft einen leistungsfähigeren Gurtstraffer, bei dem die Leckageströme aus dem Arbeitsraum verringert werden und der dennoch einfach aufgebaut ist. Dies wird durch einen Gurtstraffer mit den Merkmalen des Anspruchs 1 erreicht. Die Dichtlippe baut axial relativ lang und kann deshalb leicht elastisch gebogen werden, sich dem Verlauf der Mantelfläche des Zylinders anpassen, Schwankungen des Innendurchmessers ausgleichen und dadurch das Einschleifen verbessern.

Der kurze Bund ist so ausgebildet, daß er beim Einbau des Kolbens in den Zylinder teilweise abgetragen wird und sich dadurch an die Innenfläche des Zylinders anpaßt. Dieser Vorgang kann mit einem sogenannten Einschleifen verglichen werden. Eine besonders gute Dichtigkeit läßt sich durch eine Werkstoffpaarung Stahl/Aluminium erreichen, wobei die Dichtungsplatte aus Aluminium und der Zylinder aus Stahl sind.

Bei der bevorzugten Ausführungsform erweitert sich die Dichtlippe zu ihrem freien, an der Mantelfläche anliegenden Rand hin konisch, wodurch das Einführen des Kolbens in den Zylinder beim Zusammenbau erleichtert wird.

Bei der bevorzugten Ausführungsform ist die Dichtungsplatte zum Arbeitsraum hin ausgehöhlt und vergrößert den Arbeitsraum, in den Druckgas aus einem Behälter mit gespeichertem Druckgas oder einem pyrotechnischen Gasgenerator einströmt. Dadurch kann der Kolben/Zylinder-Linearantrieb insgesamt kürzer bauen, was bei den im Fahrzeug ohnehin geringen zur Verfügung stehenden Bauraum anzustreben ist. Die Dichtlippe wird durch die verbleibende Umfangswandung der Dichtungsplatte gebildet.

Ferner ist vorgesehen, daß der Kolben aus einigen wenigen, einfach zu fertigenden Teilen zusammengesetzt ist. Bei der bevorzugten Ausführungsform ist neben der Dichtungsplatte eine Führungshülse vorgesehen, die eine sich zum Arbeitsraum konisch verengende, zentrische Öffnung aufweist, an die sich die ebenfalls konisch verengende Öffnung der Dichtungsplatte absatzlos anschließt. Der Verriegelungskörper ist als Kegelhülse ausgebildet und in die Öffnungen gepreßt, so daß aufgrund der Keilwirkung die Teile miteinander durch Reibschluß verbunden werden. Bei dieser Konstruktion wird die Reibungskraft zwischen den Teilen durch den auf die Dichtungsplatte einwirkenden Druck des Gases noch gesteigert, so daß sich ein selbstverstärkender Effekt ergibt.

Weitere Merkmale und Vorteile der Erfindung ergeben sich aus der nachfolgenden Beschreibung und der nachfolgenden Zeichnungen, auf die Bezug genommen wird. In den Zeichnungen zeigt:
Fig. 1 eine Längsschnittansicht des Kolben/Zylinder-Linearantriebs als Teil des erfindungsgemäßen Gurtstraffers,
Fig. 2 eine Längsschnittansicht der Dichtungsplatte als Teil des in Fig. 1 gezeigten Kolbens.

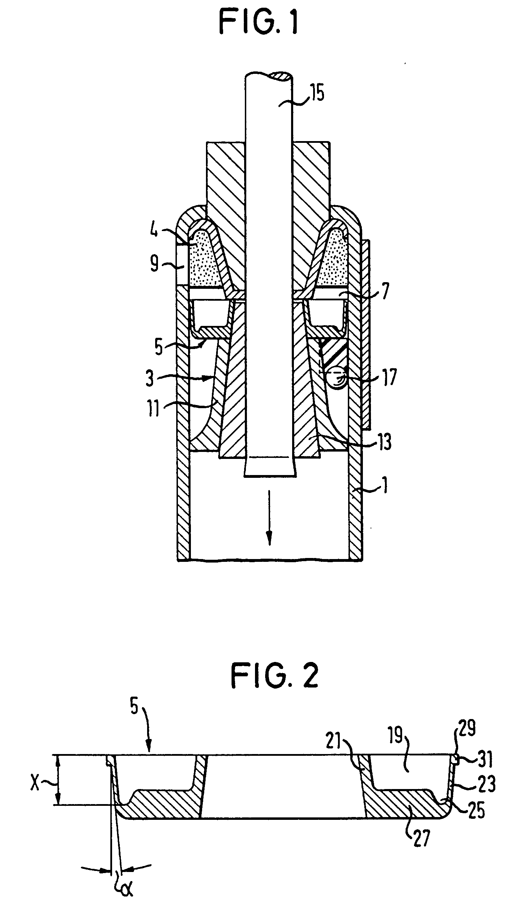

In Fig. 1 ist der obere Abschnitt eines Kolben/Zylinder-Linearantriebs als Teil eines Gurtstraffers gezeigt. Im Inneren des Zylinders 1 sind ein Kolben 3, der aus mehreren Teilen zusammengesetzt ist, und ein Gasgenerator 4 angeordnet. Eine Dichtungsplatte 5 bildet einen Kolbenboden und begrenzt einen Arbeitsraum 7 im Inneren des Zylinders 1. Eine Öffnung 9 im oberen Bereich des Zylinders 1 verbindet den Gasgenerator 4 mit einer Zündeinheit (nicht gezeigt). Der Kolben 3 umfaßt weiter eine Führungshülse 11 mit einer sich zum Arbeitsraum 7 konisch verengenden Öffnung, in die ein kegelhülsenförmiger Verriegelungskörper 13 eingepreßt ist. Der Verriegelungskörper 13 ragt zum Arbeitsraum 7 hin aus der Führungshülse 11 heraus und in eine zentrische Öffnung der Dichtungsplatte 5, die sich an die Öffnung in der Führungshülse 11 absatzlos und mit dem gleichen Konuswinkel anschließt. Der Verriegelungskörper 13 bildet einen Kegelsitz für die Dichtungsplatte 5 und die Führungshülse 11, die durch den Verriegelungskörper 13 kraftschlüssig miteinander verbunden sind.

Am Verriegelungskörper 13 ist auf bekannte Weise ein Zugmittel 15 in Form eines Zugseils befestigt, das wiederum an einem am Sicherheitsgurt angreifenden Teil befestigt ist.

Die äußere Mantelfläche der Führungshülse 11 erweitert sich zu dem dem Arbeitsraum 7 abgewandten Ende hin trompetenförmig, bis sie schließlich die innere Mantelfläche des Zylinders 1 annähernd berührt. Der Kolben 3 wird damit an zwei axial versetzt zueinander angeordneten Orten in dem Zylinder 1 geführt und ist gegen Verkippen gut gesichert. An der äußeren Mantelfläche der Führungshülse 11 liegen am Umfang mehrere Verriegelungskörper 17 in Form von Kugeln an, von denen nur eine gezeigt ist.

Die insgesamt ringförmige Dichtungsplatte 5 ist in Fig. 2 exakter dargestellt. Auf der dem Arbeitsraum 7 zugewandten Seite ist die Dichtungsplatte 5 ausgehöhlt, so daß der Arbeitsraum 7 um das mit 19 bezeichnete Volumen vergrößert wird. Der ausgehöhlte Bereich wird in radiale Richtung auf der Innenseite durch eine stabile Wandung 21 und auf der Außenseite durch eine dünne Umfangswandung begrenzt, die eine Dichtlippe 23 bildet. Das bodenseitige Ende des ausgehöhlten Bereichs ist in der Nähe der Dichtlippe 23 durch eine Ringnut 25 weiter ausgehöhlt, die dazu dient, die axiale Länge X der Dichtlippe 23 zu erhöhen. Der bodenseitige Abschnitt 27 der Dichtungsplatte 5 ist stabil genug, um beim Auftreten von größeren Druckkräften nicht durchgebogen zu werden.

Die Dichtlippe 23 erweitert sich zu ihrem freien Rand 29 hin. Die äußere Mantelfläche der Dichtlippe 23 verläuft dabei unter einem Konuswinkel α von maximal etwa 10 Grad gegenüber der Längsachse des Zylinders 1. Dadurch wird das Einführen des Kolbens 3 in den Zylinder 1 beim Zusammenbau der Kolben/Zylinder-Einheit erleichtert. Der freie Rand 29 weist auf seiner Außenseite einen axial kurzen Bund 31 auf, der an der inneren Mantelfläche des Zylinders 1 mit einer Vorspannung anliegt, so daß kein Schlitz zwischen der Dichtlippe 31 und der inneren Mantelfläche des Zylinders 1 entsteht. Der axial kurze Bund 31 reibt sich beim Einführen des Kolbens 3 in den Zylinder 1 geringfügig ab und paßt sich dadurch der Kontur der inneren Mantelfläche weitgehend an. Um den Reibungswiderstand des Kolbens 3 im Zylinder 1 zu verringern, ist der Kolben 3 mit einem Trockenschmierstoff beschichtet.

Im Kollisionsfall wird über die Öffnung 9 das pyrotechnische Treibmittel im Gasgenerator 4 gezündet und Druckgas strömt in den Arbeitsraum 7, das den Kolben 3 in Pfeilrichtung beschleunigt. Das Druckgas strömt dabei auch in den mit 19 bezeichneten ausgehöhlten Bereich der Dichtungsplatte 5 ein und drückt die umlaufende Dichtlippe 23 radial nach außen, so daß sich ein selbstverstärkender Dichteffekt ergibt.

Wenn der Kolben 3 seine unterste Stellung erreicht hat und der Sicherheitsgurt gestrafft ist, verhindern die Verriegelungskörper 17 ein Zurückschieben des Kolbens 3. Die Verriegelungskörper 17 können sich dabei in die Wand des Zylinders 3 eindrücken und diese plastisch verformen, so daß sie auch eine kraftbegrenzende Wirkung haben.

Die aus Leichtmetall, z.B. Aluminium bestehende Dichtungsplatte 5 wird durch ein Fließpreß- oder Tiefziehverfahren hergestellt.

## Patentansprüche

1. Gurtstraffer, mit einem Kolben/Zylinder-Linearantrieb, dessen Kolben (3) durch in einen Arbeitsraum (7) einströmendes Druckgas angetrieben werden kann und über ein an ihm befestigtes Zugmittel (15) ein am Sicherheitsgurt angreifendes Teil bewegt, mit einem den Arbeitsraum (7) begrenzenden Kolbenboden, der durch eine ringförmige Dichtungsplatte (5) gebildet ist, an der eine im wesentlichen axial verlaufende, dünne Dichtlippe (23) angeformt ist, welche radial federnd nachgiebig ist und mit einer Vorspannung an der inneren Mantelfläche des Zylinders (1) anliegt, **dadurch gekennzeichnet, daß** ein an der Mantelfläche des Zylinders (1) anliegender freier Rand (29) der Dichtlippe (23) außenseitig einen axial kurzen Bund (31) aufweist, wobei der Bund (31) so ausgebildet ist, daß er beim Einbau des Kolbens (5) in den Zylinder (1) teilweise abgetragen werden und sich dadurch an die innere Mantelfläche des Zylinders (1) anpassen kann.

2. Gurtstraffer nach Anspruch 1, **dadurch gekennzeichnet, daß** die Dichtungsplatte (5) aus Aluminium ist.

3. Gurtstraffer nach einem der vorstehenden Ansprüche, **dadurch gekennzeichnet, daß** die Dichtungsplatte (5) zum Arbeitsraum (7) hin ausgehöhlt ist und ihn vergrößert und daß die Dichtlippe (23) durch eine an dem ausgehöhlten Bereich radial angrenzende verbleibende Umfangswandung der Dichtungsplatte (5) gebildet ist.

4. Gurtstraffer nach einem der vorstehenden Ansprüche, **dadurch gekennzeichnet, daß** sich die Dichtlippe (23) zu ihrem freien, an der Mantelfläche anliegenden Rand (29) hin konisch erweitert.

5. Gurtstraffer nach Anspruch 4, **dadurch gekennzeichnet, daß** die äußere Mantelfläche der Dichtlippe (23) unter einem Konuswinkel (a) von maximal etwa 10 Grad gegenüber der Längsachse des Zylinders (1) zu ihrem freien Rand (29) nach außen verläuft.

6. Gurtstraffer nach einem der vorstehenden Ansprüche, **gekennzeichnet durch** eine Führungshülse (11), die an der Dichtungsplatte (5) auf der dem Arbeitsraum (7) abgewandten Seite anliegt, und **durch** einen Verriegelungskörper (13), an dem das Zugmittel (15) befestigt ist, wobei die Dichtungsplatte (5) und die Führungshülse (11) jeweils **durch** Reibschluß mit dem Verriegelungskörper (13) verbunden sind.

7. Gurtstraffer nach Anspruch 6, **dadurch gekennzeichnet, daß** die Führungshülse (11) eine sich zum Arbeitsraum (7) konisch verengende, zentrische Öffnung aufweist, an die sich eine ebenfalls konisch verengende Öffnung der Dichtungsplatte (5) absatzlos anschließt, und daß der Verriegelungskörper (13) als in die Öffnungen eingepreßte Kegelbuchse ausgebildet ist.

8. Gurtstraffer nach Anspruch 6 oder 7, **dadurch gekennzeichnet, daß** an der äußeren Mantelfläche der Führungshülse (13) wenigstens ein Verriegelungselement (17) angeordnet ist, das ein Zurückziehen des Kolbens (3) nach erfolgtem Straffen verhindert.

## Claims

1. A belt tensioner, comprising a piston/cylinder linear drive, the piston (3) of which can be driven by compressed gas entering a working space (7) and which piston, via a traction means (15) attached to the piston, moves a part engaging the safety belt, including a piston head delimiting the working space (7) and being formed by an annular sealing plate (5), on which a substantially axially extending thin sealing lip (23) is formed which is resilient so as to yield in the radial direction and which contacts the inner shell surface of the cylinder (1) in a biased condition, **characterized in that** a free edge (29) of the sealing lip (23) contacts the shell surface of the cylinder (1) and has an axially short collar (31) on its outer face, the collar (31) being designed such that on installation of the piston (5) into the cylinder (1) the collar (31) can be partly cut away and is thereby able to adapt itself to the inner shell surface of the cylinder (1).

2. The belt tensioner according to claim 1, **characterized in that** the sealing plate (5) is made of aluminium.

3. The belt tensioner according to any of the preceding claims, **characterized in that** the sealing plate (5) is hollowed out toward the working space (7) and increases the size thereof, and **in that** the sealing lip (23) is formed by a remaining peripheral wall of sealing plate (5), said wall radially adjoining the hollowed out portion.

4. The belt tensioner according to any of the preceding claims, **characterized in that** the sealing lip (23) widens conically toward its free edge (29) contacting the shell surface.

5. The belt tensioner according to claim 4, **characterized in that** the outer shell surface of the sealing lip (23) extends outwardly toward its free edge (29) at a cone angle (α) of at the most approximately 10 degrees with respect to the longitudinal axis of the cylinder (1).

6. The belt tensioner according to any of the preceding claims, **characterized by** a guide sleeve (11) contacting the sealing plate (5) at the side facing away from the working space (7), and by a locking member (13) to which the traction means (15) is attached, the sealing plate (5) and the guide sleeve (11) each being frictionally connected with the locking member (13).

7. The belt tensioner according to claim 6, **characterized in that** the guide sleeve (11) has a central opening which conically narrows toward the working space (7) and which is adjoined in continuous transition by an opening of the sealing plate (5), said latter opening also narrowing conically, and **in that** the locking member (13) is configured as a cone bushing pressed into the openings.

8. The belt tensioner according to claim 6 or claim 7, **characterized in that** on the outer shell surface of the guide sleeve (13) at least one locking element (17) is arranged which prevents reverse movement of the piston (3) after completion of the tensioning.

## Revendications

1. Tendeur de ceinture comprenant un moyen d'entraînement linéaire à piston/cylindre dont le piston (3) peut être entraîné par un gaz comprimé pénétrant dans une chambre de travail (7) et déplace, par l'intermédiaire d'un moyen de traction (15) auquel il est fixé, une pièce agissant sur la ceinture de sécurité, comprenant un fond de piston délimitant la chambre de travail (7), qui est formé par une plaque d'étanchéité annulaire (5) sur laquelle est moulée une mince lèvre d'étanchéité (23) sensiblement axiale qui est radialement déformable élastiquement et qui est appliquée avec une précontrainte sur la surface enveloppe intérieure du cylindre (1), **caractérisé en ce qu'**un bord libre (29) de la lèvre d'étanchéité (23) appliqué contre la surface enveloppe du cylindre (1) présente sur le côté extérieur un court collet axial (31), le collet (31) étant réalisé de façon à pouvoir être partiellement enlevé lors du montage du piston (5) dans le cylindre (1) et à pouvoir ainsi épouser la surface enveloppe intérieure du cylindre (1).

2. Tendeur de ceinture selon la revendication 1, **caractérisé en ce que** la plaque d'étanchéité (5) est en aluminium.

3. Tendeur de ceinture selon l'une quelconque des revendications précédentes, **caractérisé en ce que** la plaque d'étanchéité (5) est creusée en direction de la chambre de travail (7) qu'elle agrandit, et **en ce que** la lèvre d'étanchéité (23) est formée par une paroi périphérique restante de la plaque d'étanchéité (5), qui est radialement adjacente à la zone creusée.

4. Tendeur de ceinture selon l'une quelconque des revendications précédentes, **caractérisé en ce que** la lèvre d'étanchéité (23) est évasée sous forme conique en direction de son bord libre (29) appliqué contre la surface enveloppe.

5. Tendeur de ceinture selon la revendication 4, **caractérisé en ce que** la surface enveloppe extérieure de la lèvre d'étanchéité (23) s'étend vers l'extérieur selon un angle de cône (α) d'environ 10 degrés maximum par rapport à l'axe longitudinal du cylindre (1) en direction de son bord libre (29).

6. Tendeur de ceinture selon l'une quelconque des revendications précédentes, **caractérisé par** un manchon de guidage (11) qui est appliqué contre la plaque d'étanchéité (5) sur le côté opposé à la chambre de travail (7), et par un corps de verrouillage (13) auquel le moyen de traction (15) est fixé, la plaque d'étanchéité (5) et le manchon de guidage (11) étant chacun reliés par friction au corps de verrouillage (13).

7. Tendeur de ceinture selon la revendication 6, **caractérisé en ce que** le manchon de guidage (11) présente un orifice centré qui se rétrécit sous forme conique vers la chambre de travail (7), auquel se raccorde sans décrochement un orifice, lui aussi à rétrécissement conique, de la plaque d'étanchéité (5), et **en ce que** le corps de verrouillage (13) est réalisé sous la forme d'une douille conique emmanchée dans les orifices.

8. Tendeur de ceinture selon la revendication 6 ou 7, **caractérisé en ce que** sur la surface enveloppe extérieure du manchon de guidage (13) est disposé au moins un élément de verrouillage (17) qui empêche le retrait du piston (3) une fois la tension réalisée.
